# EUROPÄISCHE PATENTSCHRIFT

(11) **EP 3 354 950 B1**
(45) Veröffentlichungstag und Bekanntmachung des Hinweises auf die Patenterteilung: **20.11.2019**
(21) Anmeldenummer: 18151904.2
(22) Anmeldetag: 16.01.2018
(51) Int. Cl.: F16K 31/06, F16K 31/08, F15B 13/044, F15B 13/043

(54) **VENTILEINRICHTUNG**
VALVE DEVICE
DISPOSITIF DE SOUPAPE

(30) Priorität: 27.01.2017 DE 102017201316
(43) Veröffentlichungstag der Anmeldung: 01.08.2018
(73) Patentinhaber: FESTO AG & Co. KG, 73734 Esslingen (DE)
(72) Erfinder: Herrig, Martin, 73265 Dettingen (DE)
(74) Vertreter: Patentanwälte Magenbauer & Kollegen Partnerschaft mbB

(56) Entgegenhaltungen:
- EP-A1- 0 916 049
- EP-A1- 2 193 298
- DE-A1-102009 033 585
- JP-A- S63 106 403
- JP-U- S6 230 001
- US-A- 4 193 421

## Beschreibung

Die Erfindung betrifft eine Ventileinrichtung.

Aus der DE 692 19 877 T2 ist ein Messwandler mit einer Spulenwicklung zur Erzeugung eines Magnetfelds bekannt, der einen Magneten umfasst, um in Reaktion auf das Magnetfeld der Spulenwicklung eine Schwenkbewegung zu bewirken, wobei die Spulenwicklung in einem Gehäuse aufgenommen ist, das eine Trennwand umfasst, um zwei voneinander isolierte Gehäusekanten zu bilden, wobei das Gehäuse eine in der Trennwand ausgebildete Vertiefung hat, die Seitenwände und eine Bodenwand aufweist, sowie mit einem Lager, das mit dem Magnet verbunden ist, um in Reaktion auf das Magnetfeld eine Schwenkbewegung des Magneten um eine sich durch den Magnet erstreckende Achse zu ermöglichen, und eine Lager-Halteanordnung, mit der das zumindest eine Lager verbunden ist, um den Magnet und das zumindest eine Lager in dem von der Spulenwicklung umgebenden Raum herabhängend zu halten, wobei der Magnet in der Vertiefung in einer der Kammern durch die Lager-Halteanordnung herabhängend gehalten ist und wobei die Wicklung in der anderen Kammer um die Vertiefung herum angeordnet ist.

Die JP S 63 106403 A offenbart einen elektro-pneumatischen Wandler, bei dem zur Abstützung eines Endbereichs einer Prallplatte zwei elektrisch leitende Blattfedern eingesetzt werden, die sich rechtwinklig kreuzen und die mit den jeweiligen Anschlussdrähten einer Erregerspule verbunden werden.

Aus der DE 10 2009 033585 A1 ist ein Ventil mit zwei Steuerelementen bekannt, die in einem Ventilgehäuse relativ zueinander bewegbar angeordnet sind und die mit je einem Verschlussmittel bewegungsgekoppelt sind, das einem Ventilsitz gegenüberliegt, wobei als Antriebsmittel für die Steuerelemente eine elektrodynamische Antriebseinrichtung vorgesehen ist, die eine bezüglich dem Ventilgehäuse ortsfeste erste Antriebseinheit und eine diesbezüglich bewegliche zweite Antriebseinheit aufweist, wobei die zweite Antriebseinheit als Bestandteil eines Mitnehmers, der je nach Bewegungsrichtung der zweiten Antriebseinheit auf entweder nur das erste Steuerelement oder nur das zweite Steuerelement einwirkt, um dessen Schaltstellung zu verändern, ausgebildet ist.

Die EP 2 193 928 A1 offenbart ein Ventil mit zwei Steuerelementen, die in einem Ventilgehäuse relativ zueinander bewegbar angeordnet sind, wobei beide Steuerelemente mit je einem Verschlussmittel bewegungsgekoppelt sind, das einem Ventilsitz gegenüberliegt und wobei eine elektrodynamische Antriebseinrichtung als Antriebsmittel für die Steuerelemente vorhanden ist, die eine am ersten Steuerelement angeordnete Permanentmagneteinheit und eine am zweiten Steuerelement angeordnete Spuleneinheit umfasst, wobei die Steuerelemente durch entgegengesetzte Bestromung zur Ausführung einander entgegengesetzt gerichteter Relativbewegungen angetrieben werden können.

Die Aufgabe der Erfindung besteht darin, eine Ventileinrichtung bereit zu stellen, die mit einer geringen Energiemenge betrieben werden kann.

Diese Aufgabe wird für eine Ventileinrichtung der eingangs genannten Art mit den Merkmalen des Anspruchs 1 gelöst..

Dabei kommt dem Festkörpergelenk eine Doppelfunktion zu, da es einerseits für die schwenkbewegliche und spielfreie Lagerung des Verbindungsteils am Ventilgehäuse dient und zum anderen für eine elektrische Verbindung des Läufers mit einer Anschlusseinrichtung ausgebildet ist, um elektrische Energie an den Läufer bereitstellen zu können. Vorzugsweise ist das Festkörpergelenk aus einem metallischem Werkstoff, insbesondere aus einem federelastischem Werkstoff, hergestellt. Bei einer vorteilhaften Ausführungsform ist das Festkörpergelenk derart dimensioniert, dass es in Abwesenheit einer elektrischen Versorgung des Läufers eine vorgebbare Schwenkstellung für das Verbindungsteil gegenüber dem Ventilgehäuse vorgibt. Hierdurch kann gewährleistet werden, dass sich die Ventileinrichtung ohne eine elektrische Spannungsversorgung in einem eindeutigen fluidischen Schaltzustand befindet. Besonders bevorzugt ist vorgesehen, dass das am formstabilen Verbindungsteil ausgebildete Ventilglied ohne eine elektrische Versorgung des Läufers einen maximalen Querschnitt des Fluidkanals freigibt und mit Bereitstellung einer elektrischen Versorgung an den Läufer aus dieser Öffnungsstellung, vorzugsweise stufenlos oder frei einstellbar, insbesondere proportional zu einem vorgebbaren Stromfluss durch den Läufer, in eine Schließstellung bewegt werden kann, in der eine Reduzierung des Querschnitts des Fluidkanals, insbesondere eine Blockierung des Fluidkanals, erreicht werden kann. Exemplarisch ist vorgesehen, dass das Verbindungsteil als Ventilglied ausgebildet ist, sodass durch eine Schwenkbewegung des Verbindungsteils um eine vom Festkörpergelenk bestimmte Schwenkachse ein Querschnitt des Fluidkanals unmittelbar vom Verbindungsteil beeinflusst wird. Alternativ ist am Verbindungsteil ein Ventilglied, insbesondere eine gummielastische Dichtung angeordnet, die in Abhängigkeit von der Schwenkbewegung des Verbindungsteils den Querschnitt des Fluidkanals beeinflusst.

Zweckmäßig ist es, wenn ein erster Abschnitt des Fluidkanals ausgehend vom Eingangsanschluss als Ausnehmung in einem Kanalstutzen ausgebildet ist, der in einen Ventilraum ragt und der eine gegenüberliegend zum Ventilglied angeordnete Mündungsöffnung aufweist und wenn ein zweiter Abschnitt des Fluidkanals als Ventilraum ausgebildet ist, in dem die Antriebseinrichtung, das Verbindungsteil, das Ventilglied und das wenigstens eine Festkörpergelenk angeordnet sind und in den der Kanalstutzen hineinragt. Dabei bildet eine gegenüberliegend zum Ventilglied angeordnete und von der Mündungsöffnung des ersten Abschnitts des Fluidkanals durchsetzte Stirnfläche des Kanalstutzens einen Ventilsitz, an dem das Ventilglied in Abhängigkeit von der Schwenkstellung des Verbindungsteils zur Blockierung des Fluidkanals abdichtend anliegen kann oder zur Freigabe des Fluidkanals in einem Abstand zur Mündungsöffnung angeordnet sein kann.

Vorteilhaft ist es, wenn die gegenüberliegend zum Ventilglied angeordnete und von der Mündungsöffnung durchsetzte Stirnfläche des Kanalstützens derart an das schwenkbewegliche Ventilglied angepasst ist, dass in einer Schließstellung des Ventilglieds eine flächig abdichtende Anlage des Ventilglieds am Kanalstutzen gewährleistet ist. Da sich die Winkellage des Ventilglieds in Abhängigkeit von der Schwenkstellung des Verbindungsteils verändert, ist es für eine zumindest weitgehende Abdichtwirkung zwischen Ventilglied und Mündungsöffnung vorteilhaft, wenn die Stirnfläche des Kanalstutzens, die von der Mündungsöffnung durchsetzt wird, in der Schließstellung der Ventileinrichtung kongruent zu einer Oberfläche des Ventilglieds in der Schließstellung ist. Besonders bevorzugt ist vorgesehen, dass die Stirnfläche eben, insbesondere kreisringförmig, ausgebildet ist und dass die Oberfläche des Ventilglieds auch als Ebene ausgebildet ist, sodass die gewünschte flächige Anlage des Ventilglieds an der Stirnfläche sichergestellt ist.

In weiterer Ausgestaltung der Erfindung ist vorgesehen, dass das Verbindungsteil eine, insbesondere mittels einer U-förmigen Ausnehmung, bereichsweise freigestellte Ventilgliedzunge aufweist, an der das gegenüberliegend zum Kanalstutzen angeordnete Ventilglied ausgebildet ist und die für eine elastische Relativbewegung des Ventilglieds gegenüber dem Verbindungsteil bei Auflage auf dem Kanalstutzen ausgebildet ist. Durch die Freistellung, die beispielsweise als gekrümmter Schlitz in das Verbindungsteil eingebracht werden kann, wird eine bereichsweise Veränderung der Elastizität des Verbindungsteils erzielt. Das Verbindungsteil ist grundsätzlich formstabil ausgebildet, so dass es sich im Rahmen eines Betriebs der Ventileinrichtung nicht in einer Weise elastisch oder plastisch deformiert, die zu einer Beeinträchtigung der Ventilfunktion für die Ventileinrichtung führen würde. Hingegen wird durch die Freistellung der Ventilgliedzunge eine lokale Vergrößerung der Elastizität für die Ventilzunge ermöglicht, so dass hiermit eine verbesserte Anlage des Ventilglieds am Kanalstutzen gewährleistet werden kann, wodurch Fertigungstoleranzen des Verbindungsteils und des Ventilgehäuse zumindest teilweise ausgeglichen werden können. Hierdurch wird eine verbesserte Abdichtwirkung für das in der Schließstellung der Ventileinrichtung am Kanalstutzen anliegende Ventilglieds erzielt, ohne dass hierfür kostenaufwendige Maßnahmen erforderlich sind. Ferner wird hierdurch ein Abheben des Ventilglieds vom Kanalstutzen bei Einwirkung von äußeren Beschleunigungen vermindert und eine Dauerfestigkeit für das Ventilglied verbessert, da während des Schließvorgangs ein hartes Aufschlagen des Ventilglieds auf dem Kanalstutzen verhindert wird. Besonders bevorzugt ist vorgesehen, dass die Freistellung als U-förmige Ausnehmung ausgebildet ist, wobei das Ventilglied an einem freien Endbereich der Ventilgliedzunge angeordnet ist, um die maximale Elastizität der Ventilgliedzunge ausnutzen zu können.

Erfindungsgemäß ist vorgesehen, dass das Verbindungsteil als gedruckte Schaltung mit elektrischen Leiterbahnen ausgebildet ist

Ergänzend kann vorgesehen sein, dass das Verbindungsteil mit wenigstens zwei elektrisch voneinander isolierten Festkörpergelenken, die jeweils für eine elektrische Versorgung des Läufers dienen, am Ventilgehäuse festgelegt ist. Das Verbindungsteil kann als gedruckte Schaltung, vorzugsweise als formstabile oder flexible Leiterplatte (PCB - printed circuit board); insbesondere als harzgetränkte, faserverstärkte Platte (FR4) oder als Kunststoffträger mit Leiterbahnen, die in MID-Technik (molded interconnect device - spritzgegossene Schaltungsträger) hergestellt sind, ausgebildet sein. Somit können zwischen dem wenigstens einen Festkörpergelenk und dem Läufer zusätzliche elektrische und/oder elektronische Komponenten angeordnet werden, die insbesondere als Ansteuerschaltung/oder als Spannungsbegrenzungsschaltung für den Läufer dienen. Hiermit kann der Läufer in Abhängigkeit von der bereitgestellten elektrischen Versorgungsenergie zielgerichtet betrieben werden. Eine Spannungsbegrenzungsschaltung oder Schutzbeschaltung dient dazu, eine im Läufer gespeicherte elektrische Energiemenge zu begrenzen, um Sicherheitsanforderungen erfüllen zu können, wie sie beispielsweise bei explosionsgeschützten Geräten verlangt werden. Ergänzend oder alternativ ist vorgesehen, dass zwischen dem Ventilgehäuse und dem Verbindungsteil wenigstens zwei elektrisch voneinander isolierte Festkörpergelenke ausgebildet sind, sodass eine elektrische Versorgung des Läufers ausschließlich über die Festkörpergelenke gewährleistet werden kann.

Bei einer vorteilhaften Weiterbildung der Erfindung ist vorgesehen, dass der Läufer als elektrische Spulenanordnung ausgebildet ist, die einen am Verbindungsteil festgelegten Spulenkörper und eine auf den Spulenkörper aufgebrachte Spulenwindung umfasst und das der Stator eine Magnetgruppe mit wenigstens einem Permanentmagneten und wenigstens einem Flussleitstück umfasst, um einen elektrodynamischen Antrieb auszubilden. Dementsprechend ist die elektrische Antriebseinrichtung zur Nutzung von Lorentzkräften vorgesehen, die aus einer Wechselwirkung eines stromdurchflossenen Leiters mit einem äußeren Magnetfeld resultieren. Hierzu kann die Spulenwindung in Abhängigkeit von einer vorgebbaren Schwenkstellung des Verbindungsteils mit einem elektrischem Strom beaufschlagt werden, der in Wechselwirkung mit dem Magnetfeld des wenigstens einen Permanentmagneten tritt und zu den Lorentzkräften führt, die die Schwenkbewegung des Verbindungsteils bewirken. Zur Erzielung einer kompakten Bauform für die Ventileinrichtung ist es vorteilhaft, wenn dem wenigstens einen Permanentmagneten wenigstens ein Flussleitstück zugeordnet ist, mit dessen Hilfe eine Konzentration des vom Permanentmagneten bereitgestellten magnetischen Flusses in Richtung von Windungsebenen der einzelnen Windungen der Spulenanordnung erzielt werden kann.

Vorteilhaft ist es, wenn der Spulenkörper einen, vorzugsweise kreiszylindrisch ausgebildeten, insbesondere metallischen, Hülsenabschnitt zur Aufnahme der Spulenwindung und einen endseitig an den Hülsenabschnitt angrenzenden, elektrisch isolierenden Montagering zu Festlegung an dem Verbindungsteil umfasst, wobei der Montagering jeweils, vorzugsweise tangential abragende mit Abzapfungen der Spulenwindung verbundene Kontaktstifte zur elektrischen Kontaktierung mit dem Verbindungsteil aufweist. Durch die Ausgestaltung des Spulenkörpers als Hülsenabschnitt kann zusammen mit dem wenigstens einen Permanentmagneten und dem zugeordneten Flussleitstück eine Tauchspulenanordnung geschaffen werden, bei der der Hülsenabschnitt den Permanentmagneten und/oder das Flussleitstück zumindest bereichsweise umgibt und gegebenenfalls zumindest bereichsweise vom Permanentmagneten und/oder vom Flussleitstück umgeben ist. Hierdurch kann eine besonders kompakte und leistungsstarke elektrische Antriebseinrichtung geschaffen werden. In Abhängigkeit von einer elektrischen Beschaltung der elektrischen Spulenanordnung kann es vorteilhaft sein, den Hülsenabschnitt aus einem metallischen Werkstoff auszubilden. Dadurch treten bei einer von außen auf die Ventileinrichtung aufgeprägten Beschleunigung und einer daraus resultierenden Bewegung der Spulenanordnung eigeninduzierte Wirbelströme im Hülsenabschnitt auf, durch die eine inhärente Dämpfungswirkung für die Spulenanordnung hervorgerufen wird. Insbesondere können somit Schwingungen bedämpft werden, die durch das auf das Ventilglied auftreffende Fluid angeregt werden.

Die Spulenwindungen durch vorzugsweise durch einen elektrisch isolierten Spulendraht, insbesondere einen Kupferlackdraht, gebildet, der dementsprechend auch gegenüber dem metallischen Hülsenabschnitt ausreichend isoliert ist. Für eine mechanische Ankopplung des Hülsenabschnitts an das Verbindungsteil ist der elektrisch isolierende Montagering vorgesehen, der wahlweise an einer Oberfläche des Verbindungsteils angebracht ist oder das Verbindungsteil durchsetzt und gegebenenfalls formschlüssig mit dem Verbindungsteil verriegelt ist. Für eine elektrische Kontaktierung der am Spulenkörper ausgebildeten Spulenwindung umfasst der Montagering wenigstens zwei elektrisch leitende Kontaktstifte. Die Kontaktstifte stehen mit den elektrischen Leiterbahnen am Verbindungsteil, insbesondere durch Verlöten, in elektrischem Kontakt. Die Abzapfungen der Spulenwindung, also die Drahtenden des Spulendrahts, sind vorzugsweise unmittelbar an den Kontaktstiften angebracht. Vorzugsweise ist vorgesehen, dass die Kontaktstifte tangential zur Spulenwindung angeordnet sind. Besonders bevorzugt ist vorgesehen, dass die tangential abragenden Kontaktstifte parallel zueinander ausgerichtet sind, um eine kompakte Anordnung am Verbindungsteil zu gewährleisten.

Bevorzugt ist vorgesehen, dass der Permanentmagnet als Ringmagnet mit einem axial ausgerichteten Magnetfeld ausgebildet ist und dass das, insbesondere rotationssymmetrisch ausgebildete, Flussleitstück für eine Umlenkung des Magnetfelds in eine Radialrichtung ausgebildet ist. Aufgrund der axialen Magnetisierung kann der Ringmagnet kostengünstig hergestellt werden. Die Aufgabe des Flussleitstücks besteht darin, das axiale Magnetfeld des Ringmagneten in eine Radialrichtung umzulenken, sodass die Feldlinien des Permanentmagneten zumindest im Wesentlichen senkrecht zu einer Mittelachse der Spulenanordnung ausgerichtet sind. Dadurch wird erreicht, dass die aus dem Magnetfeld und dem Stromfluss durch die Spulenwindungen resultierende Lorentzkraft parallel zu einer Mittelachse der Spulenanordnung ausgerichtet ist.

Vorteilhaft ist es, wenn der Läufer und der Stator einen Ringspalt ausbilden, in dem eine Dämpfungsflüssigkeit, insbesondere ein Ferrofluid, für eine Dämpfung der Ventilbewegung eingebracht ist. Durch diese Maßnahme soll eine Dämpfung für die Bewegung des Ventilglieds erzielt werden, insbesondere um Bewegungen des Ventilglieds bei von außen aufgeprägten Beschleunigungen zu vermeiden. Hierzu kann vorgesehen werden, in den Ringspalt zwischen Läufer und Stator eine zähflüssige Dämpfungsflüssigkeit, beispielsweise auf Silikonbasis, einzubringen. Besonders bevorzugt ist vorgesehen, den Ringspalt mit einem Ferrofluid zu füllen, das aufgrund der magnetischen Wechselwirkung mit dem wenigstens einen Permanentmagneten im Ringspalt verbleibt, sodass eine Kontamination der Umgebung des Ringspalts durch die Dämpfungsflüssigkeit weitgehend ausgeschlossen werden kann.

In weiterer Ausgestaltung der Erfindung ist vorgesehen, dass das Festkörpergelenk eine Schwenkachse bestimmt und dass das Verbindungsteil beidseitig der Schwenkachse erstreckt ist und aneinander entgegengesetzten Endbereichen mit dem Läufer und einem Gegengewicht versehen ist, sodass ein Schwerpunkt des Verbindungsteils auf der Schwenkachse angeordnet ist. Durch diese Maßnahme können Veränderungen der Ventilstellung für die Ventileinrichtung beim Auftreten von äußeren Beschleunigungen zumindest weitestgehend vermieden werden, da in jeder Raumrichtung ein Momentenausgleich für das Verbindungsteil gewährleistet ist.

In weiterer Ausgestaltung der Erfindung ist vorgesehen, dass ein Abstand von der Schwenkachse bis zur Mittelachse zumindest einem Abstand zwischen der Schwenkachse und der Ventilgliedzunge entspricht, vorzugsweise wenigstens das Zweifache und maximal das Achtfache, insbesondere das Vierfache, des Abstands zwischen der Schwenkachse und der Ventilgliedzunge beträgt. Hiermit wird ein vorteilhaftes Verhältnis zwischen einer für die abdichtende Auflage der Ventilgliedzunge auf der Eintrittsdüse erforderlichen Schließkraft und einem hierfür notwendigen Energiebedarf der Spulenanordnung zur Aufbringung dieser Schließkraft gewährleistet.

Eine vorteilhafte Ausführungsform der Erfindung ist in der Zeichnung dargestellt. Hierbei zeigt:
- Figur 1: eine perspektivische Darstellung einer Ventileinrichtung, wobei zur Darstellung des Aufbaus der Ventileinrichtung auf eine Darstellung einer Abdeckung für das Ventilgehäuse verzichtet wurde,
- Figur 2: eine Schnittdarstellung für die Ventileinrichtung gemäß der Figur 1,
- Figur 3: eine perspektivische Explosionsdarstellung für die Ventileinrichtung gemäß den Figuren 1 und 2,
- Figur 4: eine perspektivische Darstellung eines Verbindungsteils der Ventileinrichtung,
- Figur 5: eine Draufsicht auf das Verbindungsteil gemäß der Figur 4, und
- Figur 6: eine Schnittdarstellung des Verbindungsteils gemäß den Figuren 4 und 5.

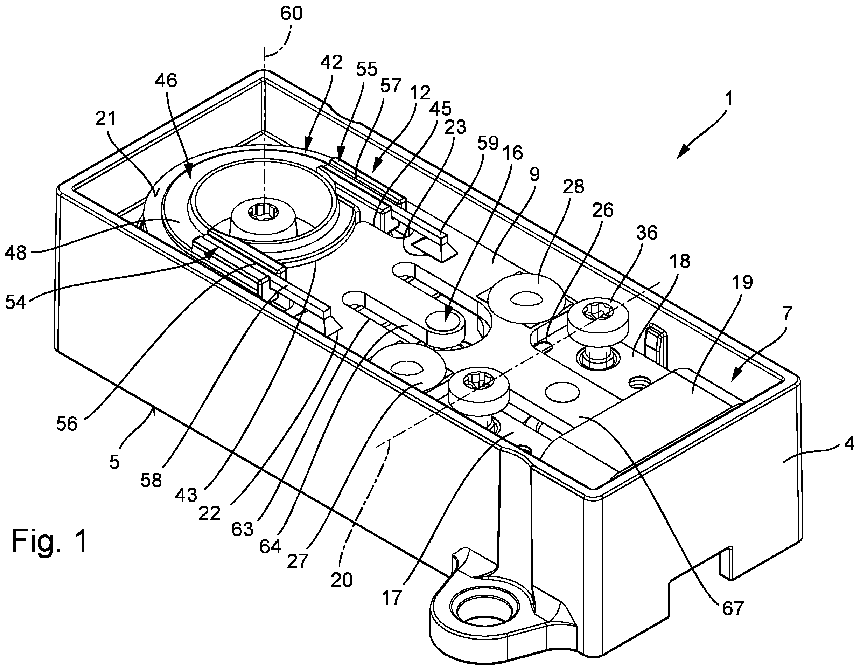

Eine in den Figuren 1 bis 3 in unterschiedlichen Ansichten dargestellte Ventileinrichtung 1 ist zur Beeinflussung eines Fluidstroms eines vorzugsweise gasförmigen Fluids, insbesondere Druckluft, zwischen einem Eingangsanschluss 2 und einer Auslassöffnung 3 ausgebildet. Beispielhaft kann vorgesehen sein, dass die Ventileinrichtung 1 als Vorsteuerventil für ein nicht dargestelltes Hauptventil eingesetzt wird, dessen

Vorsteuerung in Abhängigkeit von einem durch die Ventileinrichtung 1 bereitgestellten Differenzdruck erfolgt. Bei einer derartigen Einsatzweise für die Ventileinrichtung 1 ist die Auslassöffnung 3 lediglich als Auslass ohne Anschlussmittel für einen Fluidschlauch ausgebildet, an dem der vorzugsweise pneumatische Fluidstrom in die Umgebung austreten kann.

Die Ventileinrichtung 1 umfasst ein Ventilgehäuse 4, das rein exemplarisch zur Montage auf einer nicht dargestellten Grundplatte ausgebildet ist, wobei über die Grundplatte sowohl eine Bereitstellung eines Fluidstroms an den Eingangsanschluss 2 als auch eine Bereitstellung von elektrischer Versorgungsenergie vorgesehen sein kann. Dementsprechend ist der Eingangsanschluss 1 rein exemplarisch an einer Unterseite 5 des Ventilgehäuses 4 angeordnet. Ferner ist beispielhaft vorgesehen, dass nachstehend näher beschriebene Anschlussmittel 6 ebenfalls an der Unterseite 5 angeordnet sind, um in eine elektrische Verbindung mit der nicht dargestellten Grundplatte gebracht zu werden.

Das beispielsweise im Kunststoffspritzgußverfahren oder im generativen Herstellungsverfahren (3D-Druck) hergestellte Ventilgehäuse 4 ist rein exemplarisch mit einer quaderförmigen Außengeometrie ausgeführt. Das Ventilgehäuse 4 weist eine als Ventilraum 7 bezeichnete und als zweiter Fluidkanalabschnitt dienende Ausnehmung auf, in der die nachstehend näher beschriebenen Komponenten der Ventileinrichtung 1 angeordnet sind.

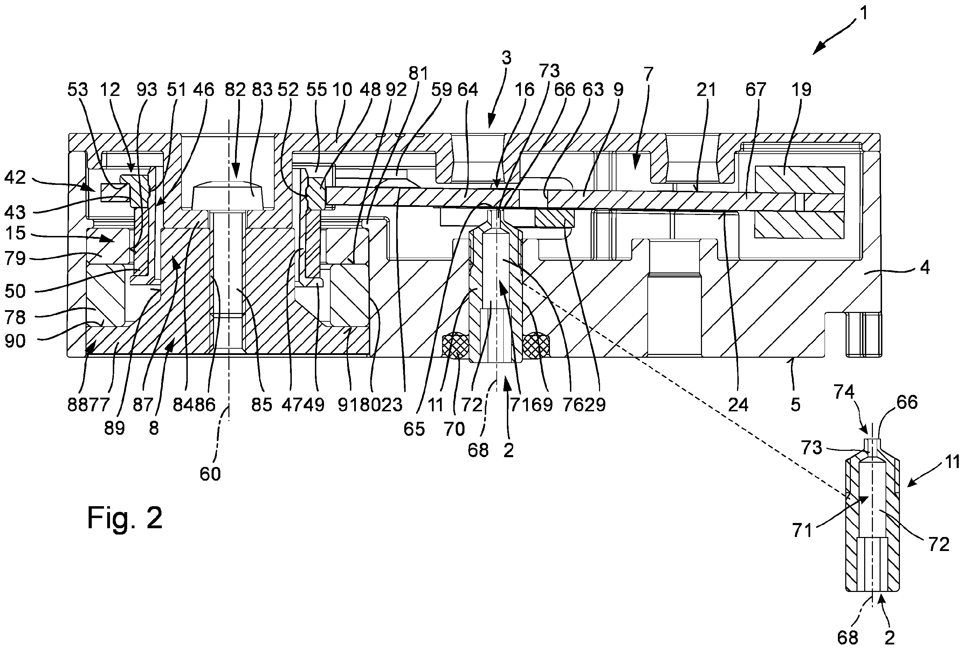

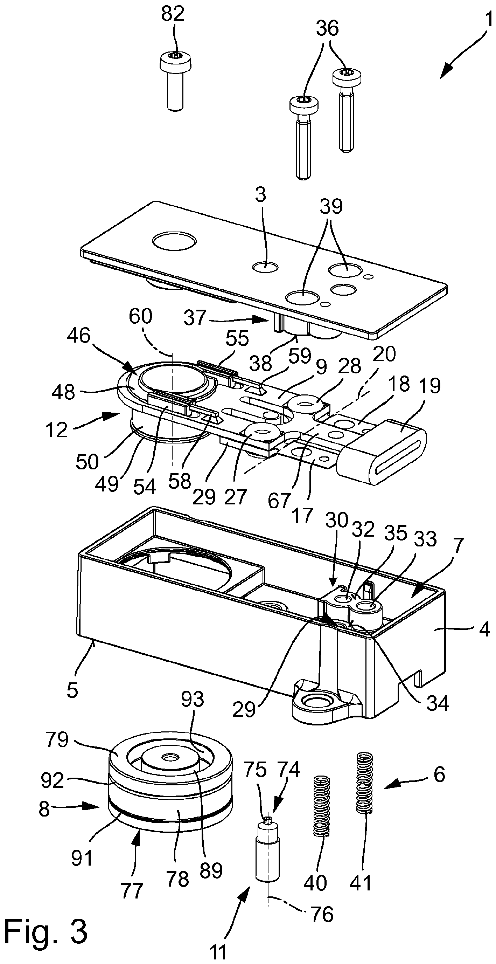

Wie aus den Darstellungen der Figuren 2 und 3 entnommen werden kann, sind dem Ventilraum 7 die Komponenten: Stator 8, Verbindungsteil 9 sowie Eintrittsdüse 11 angeordnet. Dabei sind sowohl der Stator 8 als auch das Verbindungsteil 9 aus mehreren Einzelteilen hergestellt, die nachstehend näher beschrieben werden. Die Eintrittsdüse 11 ist rein exemplarisch für eine Schraubverbindung mit dem Ventilgehäuse 4 ausgebildet, kann jedoch alternativ auch für eine Steckverbindung mit dem Ventilgehäuse oder einstückig mit dem Ventilgehäuse ausgebildet sein. Ferner umfasst die Ventileinrichtung 1 noch eine Reihe von weiteren Komponenten wie beispielsweise die Abdeckung 10.

Das Verbindungsteil 9 umfasst eine Spulenanordnung 12, die als Läufer einer elektrischen, insbesondere elektrodynamischen, Antriebseinrichtung 15 dient. Ferner umfasst das Verbindungsteil 9 ein Ventilglied 16, das im Zuge einer Schwenkbewegung des Verbindungsteils 9 einen variablen Abstand gegenüber der Eintrittsdüse 11 einnimmt und damit einen Fluidstrom durch die Eintrittsdüse 11 beeinflussen kann. Ferner sind am Verbindungsteil 9 rein exemplarisch zwei Festkörpergelenke 17, 18 ausgebildet, die für eine spielfreie schwenkbewegliche Lagerung des Verbindungsteils 9 gegenüber dem Ventilgehäuse 4 eingesetzt werden. Darüber hinaus ist am Verbindungsteil 9 ein Gegengewicht 19 angeordnet, das eine Momentenfreiheit für das Verbindungsteil 9 bezüglich einer durch die beiden Festkörpergelenke 17 und 18 bestimmten Schwenkachse 20 gewährleistet.

Erfindungsgemäß ist das Verbindungsteil 9 als gedruckte Schaltung mit nicht näher dargestellten elektrischen Leiterbahnen ausgebildet. Die Leiterbahnen sind zumindest für eine elektrische Verbindung zwischen wenigstens einem der Festkörpergelenke 17 und/oder 18, die elektrisch leitend, insbesondere aus einem metallischem Material, ausgebildet sind und zwei an einer Oberseite 21 des Verbindungsteils 9 angeordneten Kontaktflächen 22, 23 vorgesehen. Ferner kann zusätzlich vorgesehen sein, dass auf der Oberseite 21 und/oder auf einer Unterseite 24 des Verbindungsteils 9 nicht näher dargestellte elektrische oder elektronische Komponenten angeordnet sind, die insbesondere in eine jeweilige elektrische Verbindung zwischen einem der Festkörpergelenke 17 oder 18 und den Kontaktflächen 22 oder 23 elektrisch eingeschleift sind, um vorgebbare elektrische oder elektronische Funktionen für die Spulenanordnung 12 zu verwirklichen.

Beispielhaft sind die Festkörpergelenke 17 und 18 als schmale Streifen aus einem Federstahlblech ausgebildet. Für eine eindeutige Definition der Schwenkachse 20 weist jedes der Festkörpergelenke 17, 18 jeweils zwei einander gegenüberliegend angeordnete Ausstanzungen 25, 26 auf. Die Ausstanzungen 25, 26 bestimmen diejenige Zone des jeweiligen Festkörpergelenks 17, 18, an dem eine maximale Elastizität vorliegt, während angrenzende Bereiche der Festkörpergelenke 17, 18 demgegenüber eine hohe Steifigkeit aufweisen. Die beiden Festkörpergelenke 17, 18 sind rein exemplarisch am Verbindungsteil 9 formschlüssig festgelegt. Hierzu ist vorgesehen, dass die Festkörpergelenke 17, 18 jeweils mittels eines Hohlniets 27, 28 am Verbindungsteil festgelegt sind. Rein exemplarisch ist vorgesehen, dass die Festkörpergelenke 17, 18 an der Unterseite 24 des Verbindungsteils 9 flächig anliegen und dass ein, insbesondere als Leiterplattenabschnitt ausgebildetes, zusätzliches Stützteil 29 vorgesehen ist, das ebenfalls von dem jeweiligen Hohlniet 27 und 28 durchsetzt ist. Dementsprechend sind die Festkörpergelenke 17, 18 zwischen dem Verbindungsteil 9 und dem Stützteil 29 aufgenommen.

Ferner ist vorgesehen, dass die Festkörpergelenke 17, 18 mit einem vom Stützteil 29 abgewandten Endbereich jeweils auf Stützpfosten 30, 31 des Ventilgehäuses 4 aufliegen, die in den Ventilraum 7 hineinragen und die rein exemplarisch jeweils von zwei Ausnehmungen 32, 33 durchsetzt sind. Die beiden Ausnehmungen 32, 33 münden an einer rein exemplarisch eben ausgebildeten Oberfläche 34, 35 der Stützpfosten 30, 31 aus. Die Ausnehmung 32 ist zur Aufnahme einer Befestigungsschraube 36 vorgesehen, die einen an der Abdeckung 10 ausgebildeten, in dem Ventilraum 7 ragenden Gegenhalter 37 durchsetzt, der für eine flächige Anlage an dem jeweiligen Festkörpergelenk 17 beziehungsweise 18 ausgebildet ist. Da die Befestigungsschrauben 36 an einem nicht dargestellten Ringbund des Gegenhalters 37 aufliegt und die Abdeckung 10 in der Figur 1 nicht dargestellt ist, weisen die Befestigungsschrauben 36 einen Abstand gegenüber den Festkörpergelenken 17 und 18 auf, der der Dicke des Ringbunds entspricht. Alternativ könnte vorgesehen sein, das die Schraubenköpfe der Befestigungsschrauben 36 unmittelbar auf den Festkörpergelenken 17, 18 aufliegen und eine Befestigung der Abdeckung 10 am Ventilgehäuse 4 in anderer Weise erfolgt.

Vorzugsweise ist eine dem jeweiligen Festkörpergelenk 17, 18 zugewandte Unterseite 38 des Gegenhalters 37 eben ausgebildet, sodass das jeweilige Festkörpergelenk 17, 18 flächig zwischen dem jeweiligen Stützpfosten 30, 32 und dem gegenüberliegenden Gegenhalter 37 aufgenommen ist. Wie aus der Darstellung der Figur 3 entnommen werden kann, sind die Abdeckung 10 und der sich daran anschließende Gegenhalter 37 von einer Ausnehmung 39 durchsetzt, die zur Aufnahme des Schraubenkopfs der Befestigungsschraube 36 dient. An diese Ausnehmung schließt sich eine an der Unterseite 38 ausmündende nicht dargestellte weitere Ausnehmung an, die geringfügig größer als der Schaft der jeweiligen Befestigungsschraube 36 ist. Diese Ausnehmung bestimmt den Ringbund, der als Auflage für den Schraubenkopf der Befestigungsschraube 36 dient und somit die Kraftübertragung von der Befestigungsschraube 36 über die Abdeckung 10 auf das jeweilige Festkörpergelenk 17, 18 in das Ventilgehäuse 4 gewährleistet.

Die in den jeweiligen Stützpfosten 30, 31 rein exemplarisch vorgesehene zweite Ausnehmung 33 dient jeweils zur Aufnahme einer Kontaktfeder 40, 41, die sich im montierten Zustand vom jeweiligen Festkörpergelenk 17, 18 bis zur Unterseite 5 des Ventilgehäuses 4 erstreckt. Die Funktion der Kontaktfeder 40, 41 besteht in der elektrischen Kopplung des jeweiligen Festkörpergelenks 17, 18 mit einer nicht dargestellten, elektrisch leitenden Anschlussfläche der ebenfalls nicht dargestellten Grundplatte. Vorzugsweise ist ein Durchmesser der Ausnehmung 33 geringfügig größer als ein Durchmesser der jeweiligen Kontaktfeder 40, 41 gewählt, sodass die jeweilige Kontaktfeder 40, 41 in unmittelbare, elektrisch leitende Anlage zum jeweiligen Festkörpergelenk 17, 18 kommt.

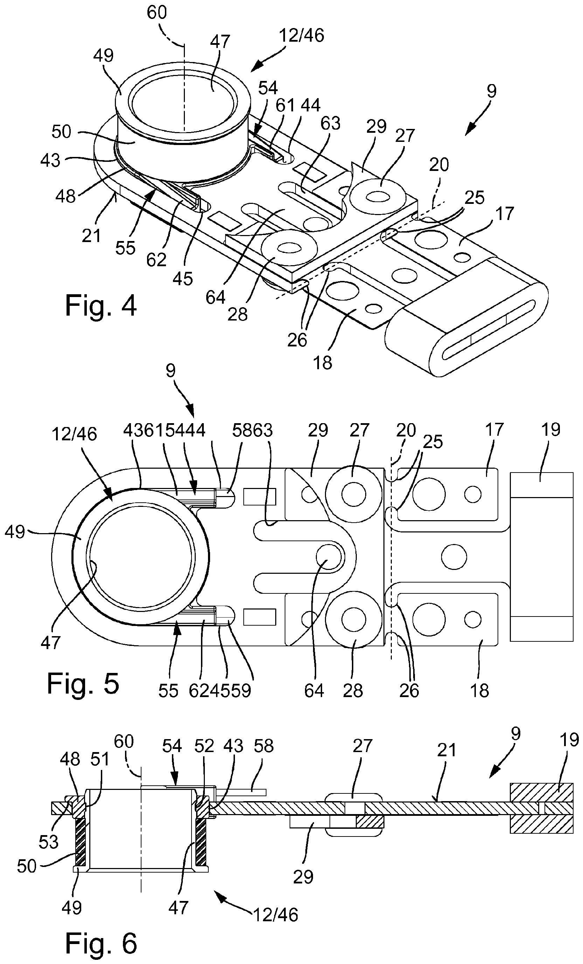

An einem dem Festkörpergelenken 17, 18 abgewandten ersten Endbereich 42 des Verbindungsteils 9 ist eine kreisförmige Ausnehmung 43 ausgebildet, die rein exemplarisch zwei parallel zueinander ausgerichtete Tangentialschlitze 44, 45 aufweist. Die Ausnehmung 43 und die sich daran anschließenden Tangentialschlitze 44, 45 sind zur Aufnahme der Spulenanordnung 12 ausgebildet, die gemäß den Darstellungen der Figuren 2, 4, 5 und 6 einen Spulenkörper 46 umfasst. Beispielhaft ist der Spulenkörper 46 aus einem metallischem Hülsenabschnitt 47 sowie einem auf den Hülsenabschnitt 47 aufgerasteten Montagering 48 gebildet, der aus einem elektrisch isolierendem Material, insbesondere Kunststoff, hergestellt ist. Der Hülsenabschnitt 47 weist an einem dem Montagering 48 abgewandten Endbereich einen radial nach außen abragenden umlaufenden Bund 49 auf, der zusammen mit dem in radialer Richtung nach außen vom Hülsenabschnitt 47 abragenden Montagering 48 jeweils eine axiale Begrenzung für einen Aufnahmeraum für die Spulenwindung 50 bildet. Vorzugsweise ist vorgesehen, dass am Hülsenabschnitt 47 eine radial nach innen vertiefte, umlaufende Nut 51 ausgebildet ist, in die ein korrespondierender, umlaufender Vorsprung 52 des Montagerings 48 formschlüssig eingreift. Der Montagering 48 ist ferner derart auf die Ausnehmung 43 abgestimmt, dass eine zumindest bereichsweise kreisringabschnittsförmige Auflagefläche 53 geschaffen wird, durch die eine präzise Ausrichtung des Spulenkörpers 46 gegenüber dem Verbindungsteil 9 gewährleistet ist.

Der Montagering 48 weist ferner zwei beispielhaft parallel zueinander ausgerichtete, exemplarisch tangential zum Hülsenabschnitt 47 angeordnete Kontakthalter 54, 55 auf. Jeder der Kontakthalter 54, 55 ist an einer in der Figur 1 dargestellten Oberseite mit einer tangential zum Hülsenabschnitt 47 ausgerichteten Nut 56, 57 versehen, in der jeweils ein elektrisch leitend ausgebildeter Kontaktstift 58, 59, insbesondere formschlüssig und/oder stoffschlüssig, festgelegt ist. Jeder der Kontaktstifte 58, 59 ragt über den jeweiligen Kontakthalter 54, 55 hinaus und ist für eine, vorzugsweise durch Löten hergestellte stoffschlüssige, elektrische Verbindung mit den Kontaktflächen 22, 23 des Verbindungsteils 9 ausgebildet. Ferner weisen die Kontakthalter 54, 55 an einer jeweils der Nut 56, 57 abgewandten Oberfläche jeweils eine schräg zu einer Mittelachse 60 des Hülsenabschnitts 47 und des Montagerings 48 ausgerichtete Rampenfläche 61, 62 auf, die zur Auflage des nicht näher dargestellten Spulendrahts zwischen der Spulenwindung 50 und dem jeweiligen Kontaktstift 58, 59 dient. Vorzugsweise ist vorgesehen, dass der nicht dargestellte Spulendraht über die jeweilige Rampenfläche 61, 62 bis zum jeweiligen Kontaktstift 58, 59 geführt wird und dort durch mehrfaches Umwickeln des Kontaktstifts 58, 59 zunächst die mechanische Verbindung zwischen Spulendraht und Kontaktstift 58, 59 hergestellt wird. Vorzugsweise ist vorgesehen, den Spulendraht mit dem jeweiligen Kontaktstift 58, 59 zu verlöten oder zu verschweißen, um hiermit eine sichere elektrische Verbindung zwischen Spulendraht und Kontaktstift 58, 59 zu erreichen.

Exemplarisch ist vorgesehen, dass ein Abstand von der Schwenkachse 20 bis zur Mittelachse 60 vierfach größer als ein Abstand zwischen der Schwenkachse 20 und der Ventilgliedzunge 64 ist, wodurch ein vorteilhaftes Verhältnis zwischen einer für die abdichtende Auflage der Ventilgliedzunge 64 auf der Eintrittsdüse 11 erforderlichen Schließkraft und einem hierfür notwendigen Energiebedarf der Spulenanordnung 12 zur Aufbringung dieser Schließkraft gewährleistet ist.

In einem zentralen Bereich des Verbindungsteils 9 ist rein exemplarisch eine U-förmige Ausnehmung 63 vorgesehen, deren U-Schenkel beispielhaft parallel zueinander und in Richtung des Spulenkörpers 46 ausgerichtet sind. Durch die Ausnehmung 63 wird am Verbindungsteil 9 eine Ventilgliedzunge 64 gebildet, die rein exemplarisch an einem Endbereich eine Planfläche 65 aufweist, die in einem montierten Zustand des Verbindungsteils 9 gegenüberliegend zu einer Stirnfläche 66 der Eintrittsdüse 11 angeordnet ist. Durch die U-förmige Ausnehmung 63 weist die Ventilgliedzunge 64 eine gegenüber dem umliegenden Verbindungsteil 9 vergrößerte Elastizität auf, sodass eine elastische Relativbewegung der Ventilgliedzunge 64 gegenüber dem Verbindungsteil 9 für eine zuverlässig abdichtende Anlage an der Eintrittsdüse 11 erzielt werden kann. Zwischen den beiden Festkörpergelenken 17, 18 erstreckt sich ein rein exemplarisch leistenförmig ausgebildeter Fortsatz 67 als zweiter Endbereich des Verbindungsteils 9, der die beiden Festkörpergelenke 17, 18 in einer Richtung quer zur Schwenkachse 20 überragt. Der Fortsatz 67 ist mit einem rein exemplarisch oval profilierten Gegengewicht 19 versehen. Beispielhaft ist vorgesehen, dass das Gegengewicht 19 aus einem Rohrabschnitt eines metallischen Materials hergestellt ist, das exemplarisch zunächst in einem ersten Schritt vorgeformt wird, um die Ovalform zumindest weitestgehend anzunehmen und dann in einem abschließenden Montageschritt durch weitere plastische Deformationen auf den Fortsatz 67 aufgepresst wird. Vorzugsweise ist vorgesehen, dass ein vom Gegengewicht 19 bezüglich der Schwenkachse 20 in Abhängigkeit von der Raumlage der Ventileinrichtung 1 ausgeübtes Drehmoment einem in Abhängigkeit von der Raumlage der Ventileinrichtung 1 bereitgestellten Drehmoment des Spulenkörpers 46 bezüglich der Schwenkachse 20 entspricht. Hierdurch wird bewirkt, dass das Verbindungsteil 9 nach der Montage in das Ventilgehäuse 4 momentenfrei aufgenommen ist und somit auch bei Auftreten von äußeren Beschleunigungen keine maßgeblichen, unerwünschten Auslenkungen erfährt.

Die Eintrittsdüse 11 ist rein exemplarisch rotationssymmetrisch ausgebildet und begrenzt einen ersten Abschnitt 68 des Fluidkanals. Ferner ist die Eintrittsdüse 11 rein exemplarisch in eine Ausnehmung 69 des Ventilgehäuses 4 eingeschraubt und ist endseitig mit einem Dichtring 70 gegenüber dem Ventilgehäuse 4 abgedichtet. Die Eintrittsdüse 11 wird von einer Stufenbohrung 71 durchsetzt, wobei ein erster Abschnitt 72 der Stufenbohrung zur Aufnahme eines nicht dargestellten Anschlussstutzens für eine Fluidversorgung ausgebildet ist, während ein zweiter Abschnitt 73 der Stufenbohrung 71 einen erheblich kleineren Durchmesser als der erste Abschnitt 72 aufweist und als Mündungsöffnung 74 an der Stirnfläche 66 der Eintrittsdüse 11 ausmündet. Da beispielhaft vorgesehen ist, dass die Eintrittsdüse 11 schraubbar in der Ausnehmung 69 aufgenommen ist, ist die Stirnfläche 66 normal zu einer Mittelachse 76 ausgerichtet. Ferner ist vorgesehen, die Eintrittsdüse 11 derart auf die Ventilgliedzunge 64 abzustimmen, dass die Planfläche 65 der Ventilgliedzunge 64 in flächige Auflage auf die Stirnfläche 66 gelangen kann. Ein einstellbarer Abstand zwischen der Ventilgliedzunge 65 und der Eintrittsdüse 11 bestimmt den Strömungswiderstand für ein am Eingangsanschluss 2 bereitgestelltes und an der Auslassöffnung 3 austretendes Fluid. Vorzugsweise ist eine Ausrichtung der Planfläche 65 der Ventilgliedzunge 64 in der Öffnungsstellung der Ventilgliedzunge 64 derart gewählt, dass die Planfläche 65 einen spitzen Winkel mit der Stirnfläche 66 der Eintrittsdüse 11 einschließt, der dem Schwenkwinkel entspricht, den die Ventilgliedzunge 64 zwischen der Öffnungsstellung und der Schließstellung überstreicht, so dass in der Schließstellung eine vorteilhafte Abdichtwirkung zwischen Ventilgliedzunge 64 und Eintrittsdüse 11 gewährleistet ist. Diese Schrägstellung der Ventilgliedzunge 64 gegenüber der Eintrittsdüse 11 in der Öffnungsstellung des Ventilglieds 16 kann beispielhaft durch eine schräge Ausrichtung der nicht näher bezeichneten Oberflächen der Stützpfosten 30, 31 des Ventilgehäuses 4 erzielt werden, in diesem Fall sind die beiden Festkörpergelenke 17, 18 als Planparallelplatten ausgebildet. Alternativ können die Festkörpergelenke 17, 18 jeweils längs der Schwenkachse geknickt ausgebildet werden, um hierdurch die gewünschte Schrägstellung für die Planfläche 65 der Ventilgliedzunge 64 in der Öffnungsstellung der Ventilgliedzunge 64 zu gewährleisten.

Exemplarisch ist die Eintrittsdüse 11 elektrisch leitend ausgebildet, insbesondere aus einem metallischen Material hergestellt, und kann zu Justagezwecken mit einer elektrischen Spannungsquelle gekoppelt werden. Ferner ist vorgesehen, dass das Ventilglied 64 elektrisch leitend ausgebildet ist und in elektrisch leitender Verbindung mit einem der Festkörpergelenke 17 oder 18 steht. Somit kann für den Fall eines mechanischen und elektrischen Kontakts zwischen Eintrittsdüse 11 und Ventilglied 64 ein Stromfluss von der Eintrittsdüse 11 bis zum Festkörpergelenk 17, 18 und von dort zu einem nicht näher dargestellten elektrischen Anschluss der Ventileinrichtung 1 erfolgen, so dass auf diesem Wege eine Einstellung der Schließstellung für das Ventilglied 64 vorgenommen werden kann.

Hiermit kann eine (Vor-)Steuerfunktion für ein nicht dargestelltes, mit der Ventileinrichtung 1 gekoppeltes und fluidisch vorgesteuertes Hauptventil gewährleistet werden.

Der Stator 8 ist rein exemplarisch aus rotationssymmetrisch ausgebildeten Komponenten zusammengesetzt und umfasst ein erstes Flussleitstück 77, einen als Ringmagnet ausgebildeten Permanentmagneten 78 sowie ein zweites Flussleitstück 79. Wie aus der Schnittdarstellung der Figur 2 entnommen werden kann, ist der Stator 8 in einer Ausnehmung 80 des Ventilgehäuses 4 aufgenommen, die sich von einer Unterseite 5 des Ventilgehäuses 4 nach oben erstreckt und endseitig von einem umlaufenden Ringbund 81 berandet ist, der zur Anlage des Stators 8 dient. Eine Festlegung des Stators 8 erfolgt rein exemplarisch mittels einer Befestigungsschraube 82, deren Schraubenkopf 83 an einem Ringbund 84 der Abdeckung 10 aufliegt, während ein Schaftabschnitt 85 der Befestigungsschraube 82 den Ringbund 84 der Abdeckung 10 durchsetzt und in eine Mittenbohrung des ersten Flussleitstücks 77 eingeschraubt ist.

Beispielhaft umfasst das erste Flussleitstück 77 eine kreiszylindrisch ausgebildete erste Flussleitzone 87 sowie eine daran angrenzende, als umlaufender Ringbund ausgeführte zweite Flussleitzone 88. Dabei ist vorgesehen, dass eine zylindermantelförmig ausgebildete Außenoberfläche 89 der ersten Flussleitzone 87 gegenüberliegend zum Hülsenabschnitt 47 des Spulenkörpers 46 angeordnet ist und diesen zumindest bereichsweise durchsetzt. Demgegenüber ist vorgesehen, dass eine kreisringförmige Oberfläche 90 der zweiten Flussleitzone 88 als Auflage für den rein exemplarisch koaxial zum ersten Flussleitstück 77 angeordneten Permanentmagneten 78 dient. Beispielhaft ist vorgesehen, dass der Permanentmagnet 78 in axialer Richtung magnetisiert ist, sodass maximale Flussdichten des Permanentmagneten 78 an den jeweils ringförmig ausgebildeten Stirnseiten 91, 92 vorliegen.

Auf der Stirnseite 92 des Permanentmagneten 78 liegt das ringförmig ausgebildete zweite Flussleitstück 79 auf, das ebenfalls koaxial zum ersten Flussleitstück 77 angeordnet ist und das für eine Umlenkung des axial ausgerichteten Magnetfelds des Permanentmagneten 78 in eine radiale Ausrichtung vorgesehen ist. In gleicher Weise dient auch das erste Flussleitstück 77 zur Umleitung des axial ausgerichteten magnetischen Flusses des Permanentmagneten 78 in eine Radialrichtung. Dementsprechend bildet sich zwischen einer Innenoberfläche 93 des zweiten Flussleitstücks 79 und der Außenoberfläche 89 der ersten Flussleitzone 87 ein Luftspalt aus, der von einem radial verlaufenden Magnetfeld durchsetzt ist, in dem die Spulenwindung der Spulenanordnung 12 angeordnet ist. Hierdurch wird gewährleistet, dass sich bei Bestromung der Spulenwindung 50 die Lorentzkräfte ausbilden können, die bezogen auf die Mittelachse 60 der Spulenwindung 50 zumindest nahezu parallel zur Mittelachse 60 wirken. Dementsprechend kann das Verbindungsteil 9 bei Bestromung der Spulenwindung 50 aus der in Figur 2 dargestellten Lage durch eine Schwenkbewegung um die Schwenkachse 20 ausgelenkt werden.

Beispielhaft ist vorgesehen, dass in dem zwischen der Innenoberfläche 93 des zweiten Flussleitstücks 79 und der Außenoberfläche 89 der ersten Flussleitzone 87 ausgebildeten Luftspalt eine nicht näher dargestellte, zähflüssige Dämpfungsflüssigkeit, eingebracht wird, um eine Bedämpfung der Bewegung des Verbindungsteils 9 zu gewährleisten, die beispielsweise durch von außen aufgeprägte Beschleunigungen und/oder durch Druckschwankungen des am Eingangsanschluss 2 bereitgestellten Fluids hervorgerufen werden können.

Durch das Gegengewicht 19 wird bezüglich der Schwenkachse 20 zumindest nahezu ein Momentengleichgewicht gewährleistet, so dass für eine Bewegung des Verbindungsteils 9 lediglich geringe Kräfte erforderlich sind. Dementsprechend ist auch eine in der elektrischen Antriebseinrichtung 15 gespeicherte Energiemenge sehr begrenzt, so dass Anforderungen des Explosionsschutzes ohne aufwändige Zusatzmaßnahmen erfüllt werden können. Dies gilt insbesondere dann, wenn der Spulenwindung 50 eine oder mehrere nicht näher dargestellte Freilaufdioden zugeordnet sind, die bei einer Eigeninduktion der Spulenwindung 50, wie sie durch plötzliche Abschaltung einer Versorgungsspannung oder durch Relativbewegungen gegenüber dem Stator 8 auftreten können, eine definierte Abfuhr der elektrischen Energie gewährleisten.

Der elektrisch leitend ausgebildete Hülsenabschnitt 47, auf den die Spulenwindung 50 aufgewickelt, dient als Dämpfungselement, da eine magnetische Kopplung mit der Spulenwindung 50 gewährleistet ist und somit beim Abschalten der elektrischen Stromversorgung für die Spulenwindung 50 oder bei einer Unterbrechung (Drahtriss) in der Spulenwindung ein Stromfluss im Hülsenabschnitt 47 hervorgerufen wird, welcher einem plötzlichen Zusammenbruch des Spulenfeldes entgegenwirkt und damit das Auftreten hoher elektrischer Spannungsspitzen in der Spulenwindung 50 wirkungsvoll verhindert.

Vorzugsweise ist vorgesehen, dass das Material des Ventilgehäuses 4 weist einen ähnlichen Ausdehnungskoeffizienten wie das Verbindungsteil 9 aufweist, so dass thermische Einflüsse auf die Ventileinrichtung 1 zumindest innerhalb eines vorgebbaren Temperaturintervalls verschwinden.

## Patentansprüche

1. Ventileinrichtung zur Beeinflussung eines Fluidstroms zwischen einem Eingangsanschluss (2) und einer Auslassöffnung (3), mit einem Ventilgehäuse (4), das von einem Fluidkanal (7, 71) durchsetzt ist, der sich von einem Eingangsanschluss (2) zu einer Auslassöffnung (3) erstreckt, wobei im Fluidkanal (7, 71) ein Ventilglied (64) angeordnet ist, das für eine Einstellung eines Querschnitts des Fluidkanals (7, 71) ausgebildet ist, mit einer elektrischen Antriebseinrichtung (15), die für eine Beeinflussung einer Position des Ventilglieds (64) im Fluidkanal (7, 71) ausgebildet ist und die einen ortsfest am Ventilgehäuse (4) festgelegten Stator (8) und einen relativbeweglich zum Stator (8) angeordneten Läufer (12) umfasst, wobei der Läufer (12) und das Ventilglied (64) an einem formstabilen Verbindungsteil (9) angeordnet sind, das mit wenigstens einem Festkörpergelenk (17, 18) schwenkbeweglich am Ventilgehäuse (4) gelagert ist, wobei das wenigstens eine Festkörpergelenk (17, 18) für eine elektrische Verbindung des Läufers (12) mit einer am Ventilgehäuse (4) ausgebildeten elektrischen Anschlußeinrichtung (6) ausgebildet ist und wobei das Verbindungsteil (9) das Ventilglied (64) bildet oder das Ventilglied trägt, wobei das Verbindungsteil (9) als gedruckte Schaltung mit elektrischen Leiterbahnen ausgebildet ist.

2. Ventileinrichtung nach Anspruch 1, **dadurch gekennzeichnet, dass** ein erster Abschnitt (71) des Fluidkanals (7, 71) ausgehend vom Eingangsanschluss (2) als Ausnehmung in einem Kanalstutzen (11) ausgebildet ist, der in einen Ventilraum (7) ragt und der eine gegenüberliegend zum Ventilglied (64) angeordnete Mündungsöffnung (74) aufweist und dass ein zweiter Abschnitt des Fluidkanals als Ventilraum (7) ausgebildet ist, in dem die Antriebseinrichtung (15), das Verbindungsteil (9), das Ventilglied (64) und das wenigstens eine Festkörpergelenk (17, 18) angeordnet sind und in den der Kanalstutzen (11) hineinragt.

3. Ventileinrichtung nach Anspruch 2, **dadurch gekennzeichnet, dass** eine gegenüberliegend zum Ventilglied (64) angeordnete und von der Mündungsöffnung (74) durchsetzte Stirnfläche (66) des Kanalstutzens (11) derart an das schwenkbewegliche Ventilglied (64) angepasst ist, dass in einer Schließstellung des Ventilglieds (64) eine flächig abdichtende Anlage des Ventilglieds (64) am Kanalstutzen (11) gewährleistet ist.

4. Ventileinrichtung nach Anspruch 2 oder 3, **dadurch gekennzeichnet, dass** das Verbindungsteil (9) eine, insbesondere mittels einer U-förmigen Ausnehmung (63), bereichsweise freigestellte Ventilgliedzunge aufweist, an der das gegenüberliegend zum Kanalstutzen angeordnete Ventilglied (64) ausgebildet ist und die für eine elastische Relativbewegung des Ventilglieds (64) gegenüber dem Verbindungsteil (9) bei Auflage auf dem Kanalstutzen (11) ausgebildet ist.

5. Ventileinrichtung nach einem der vorhergehenden Ansprüche, **dadurch gekennzeichnet, dass** das Verbindungsteil (9) mit wenigstens zwei elektrisch voneinander isolierten Festkörpergelenken (17, 18), die jeweils für eine elektrische Versorgung des Läufers dienen, am Ventilgehäuse (4) festgelegt ist.

6. Ventileinrichtung nach einem der vorhergehenden Ansprüche, **dadurch gekennzeichnet, dass** der Läufer (12) als elektrische Spulenanordnung ausgebildet ist, die einen am Verbindungsteil festgelegten Spulenkörper (46) und eine auf den Spulenkörper (46) aufgebrachte Spulenwindung (50) umfasst und dass der Stator (8) eine Magnetgruppe mit wenigstens einem Permanentmagneten (78) und wenigstens einem Flussleitstück (77, 79) umfasst, um einen elektrodynamischen Antrieb auszubilden.

7. Ventileinrichtung nach Anspruch 6, **dadurch gekennzeichnet, dass** der Spulenkörper (46) einen, vorzugweise kreiszylindrisch ausgebildeten, insbesondere metallischen, Hülsenabschnitt (47) zur Aufnahme der Spulenwindung (50) und einen endseitig an den Hülsenabschnitt (47) angrenzenden, elektrisch isolierenden Montagering (48) zur Festlegung an dem Verbindungsteil (9) umfasst, wobei der Montagering (48) jeweils, vorzugsweise tangential abragende, mit Abzapfungen der Spulenwindung (50) verbundene Kontaktstifte (58, 59) zur elektrischen Kontaktierung mit dem Verbindungsteil (9) aufweist.

8. Ventileinrichtung nach Anspruch 6 oder 7, **dadurch gekennzeichnet, dass** der Permanentmagnet (78) als Ringmagnet mit einem axial ausgerichteten Magnetfeld ausgebildet ist und dass das, insbesondere rotationssymmetrisch ausgebildete, Flussleitstück (77, 79) für eine Umlenkung des Magnetfelds in eine Radialrichtung ausgebildet ist.

9. Ventileinrichtung nach Anspruch 6, 7 oder 8, **dadurch gekennzeichnet, dass** der Läufer (12) und der Stator (8) einen Ringspalt ausbilden, in dem eine Dämpfungsflüssigkeit, insbesondere ein Ferrofluid, für eine Dämpfung der Ventilbewegung eingebracht ist.

10. Ventileinrichtung nach einem der vorhergehenden Ansprüche, **dadurch gekennzeichnet, dass** das Festkörpergelenk (17, 18) eine Schwenkachse (20) bestimmt und dass das Verbindungsteil (9) beidseitig der Schwenkachse (20) erstreckt ist und an einander entgegengesetzten Endbereichen mit dem Läufer (12) und einem Gegengewicht (19) versehen ist, so dass ein Schwerpunkt des Verbindungsteils (9) auf der Schwenkachse (20) angeordnet ist.

11. Ventileinrichtung nach 10, **dadurch gekennzeichnet, dass** ein Abstand von der Schwenkachse (20) bis zur Mittelachse (60) zumindest einem Abstand zwischen der Schwenkachse (20) und der Ventilgliedzunge (64) entspricht, vorzugsweise wenigstens das Zweifache und maximal das Achtfache, insbesondere das Vierfache, des Abstands zwischen der Schwenkachse (20) und der Ventilgliedzunge (64) beträgt.

## Claims

1. Valve device for influencing a fluid current between an inlet connection (2) and an outlet opening (3), with a valve housing (4), which is penetrated by a fluid channel (7, 71), which extends from an inlet connection (2) to an outlet opening (3), wherein a valve member (64) is arranged in the fluid channel (7, 71), which is designed to regulate a cross-section of the fluid channel (7, 71), with an electric drive device (15), which is designed to influence a position of the valve member (64) in the fluid channel (7, 71) and which comprises a stator (8) that is fixed on the valve housing (4) and an armature (12) arranged so as to be movable relative to the stator (8), wherein the armature (12) and the valve member (64) are arranged on a dimensionally-stable connection part (9), which is pivotably mounted on the valve housing (4) with at least one flexure (17, 18), wherein the at least one flexure (17, 18) is designed for an electric connection of the armature (12) to an electric connection device (6) designed on the valve housing (4) and wherein the connection part (9) forms the valve member (64) or carries the valve member, wherein the connection part (9) is designed as a printed circuit with electric circuit paths.

2. Valve device according to claim 1, **characterised in that** a first section (71) of the fluid channel (7, 71) is designed proceeding from the inlet connection (2) as a recess in a channel socket (11), which protrudes into a valve space (7) and which has a discharge opening (74) arranged opposite the valve member (64) and **in that** a second section of the fluid channel is designed as a valve space (7) in which the drive device (15), the connection part (9), the valve member (64) and the at least one flexure (17, 18) are arranged and into which the channel socket (11) protrudes.

3. Valve device according to claim 2, **characterised in that** an end surface (66) of the channel socket (11) arranged opposite the valve member (64) and penetrated by the discharge opening (74) is adapted to the pivotable valve member (64) such that an sealing abutment of the valve member (64) on the channel socket (11) is ensured in a closure position of the valve member (64).

4. Valve device according to claim 2 or 3, **characterised in that** the connection part (9) has a valve member tab which is partially released, in particular by means of a U-shaped cut (63), from the connection part and on which the valve member (64), which is arranged opposite the channel socket (11) is located and which valve member tab is designed for an elastic relative movement of the valve member (64) with respect to the connection part (9) when it is supported on the channel socket. (11) .

5. Valve device according to any one of the preceding claims, **characterised in that** the connection part (9) is fixed on the valve housing (4) with at least two flexures (17, 18) electrically insulated from each other, which serve for the electric supply of the armature.

6. Valve device according to any one of the preceding claims, **characterised in that** the armature (12) is designed as an electric coil arrangement which has a coil body (46) fixed on the connection part and a coil winding (50) applied to the coil body (46) and **in that** the stator (8) has a magnet group with at least one permanent magnet (78) and at least one flux conductor (77, 79) in order to form an electrodynamic drive.

7. Valve device according to claim 6, **characterised in that** the coil body (46) has a preferably cylindrically-designed, in particular metallic, sleeve section (47) to receive the coil winding (50) and an electrically-insulating mounting ring (48) adjoining the sleeve section (47) on the end face in order to be fixed on the connection part (9), wherein the mounting ring (48) has contact pins (58, 59) preferably protruding tangentially and connected to tappings of the coil winding (50) for electrical contact with the connection part (9).

8. Valve device according to claim 6 or 7, **characterised in that** the permanent magnet (78) is designed as a ring magnet with an axially aligned magnetic field and **in that** the flux conductor (77, 79), which is designed in particular rotationally-symmetric, is designed for deflecting the magnetic field into a radial direction.

9. Valve device according to claim 6, 7 or 8, **characterised in that** the armature (12) and the stator (8) form a ring gap in which a damping fluid, in particular a ferrofluid, is introduced for damping the valve movement.

10. Valve device according to any one of the preceding claims, **characterised in that** the flexure (17, 18) determines a pivot axis (20) and **in that** the connection part (9) is extended on both sides of the pivot axis (20) and is provided with the armature (12) and a counterweight (19) at opposing end regions so that a focal point of the connection part (9) is arranged on the pivot axis (20).

11. Valve device according to claim 10, **characterised in that** a distance from the pivot axis (20) to the centre axis (60) corresponds to at least a distance between the pivot axis (20) and the valve member tab (64), preferably at least twice and at most eight times, in particular four times the distance between the pivot axis (20) and the valve member tab.

## Revendications

1. Dispositif de soupape servant à influencer un flux de fluide entre un raccord d'entrée (2) et une ouverture de sortie (3), avec un carter de soupape (4), qui est traversé par un canal de fluide (7, 71), qui s'étend depuis un raccord d'entrée (2) vers une ouverture de sortie (3), dans lequel dans le canal de fluide (7, 71) est disposé un organe de soupape (64), qui est réalisé pour régler une section transversale du canal de fluide (7, 71), avec un dispositif d'entraînement (15) électrique, qui est réalisé pour influencer une position de l'organe de soupape (64) dans le canal de fluide (7, 71) et qui comprend un stator (8) fixé de manière stationnaire au niveau du carter de soupape (4) et un rotor (12) disposé de manière mobile relativement par rapport au stator (8), dans lequel le rotor (12) et l'organe de soupape (64) sont disposés au niveau d'une partie de liaison (9) à forme stable, qui est montée avec au moins une articulation de corps solide (17, 18) de manière mobile par pivotement au niveau du carter de soupape (4), dans lequel l'au moins une articulation de corps solide (17, 18) est réalisée pour relier de manière électrique le rotor (12) à un dispositif de raccordement (6) électrique réalisé au niveau du carter de soupape (4) et dans lequel la partie de liaison (9) forme l'organe de soupape (64) ou supporte l'organe de soupape, dans lequel la partie de liaison (9) est réalisée en tant que circuit imprimé avec des pistes conductrices électriques.

2. Dispositif de soupape selon la revendication 1, **caractérisé en ce qu'**une première section (71) du canal de fluide (7, 71) est réalisée en partant du raccord d'entrée (2) en tant qu'évidement dans une tubulure de canal (11), qui dépasse dans un espace de soupape (7) et qui présente une ouverture d'embouchure (74) disposée en face de l'organe de soupape (64), et qu'une deuxième section du canal de fluide est réalisée en tant qu'espace de soupape (7), dans lequel le dispositif d'entraînement (15), la partie de liaison (9), l'organe de soupape (64) et l'au moins une articulation de corps solide (17, 18) sont disposés et à l'intérieur duquel la tubulure de canal (11) dépasse.

3. Dispositif de soupape selon la revendication 2, **caractérisé en ce qu'**une face frontale (66) de la tubulure de canal (11) disposée en face de l'organe de soupape (64) et traversée par l'ouverture d'embouchure (74) est adaptée de telle manière à l'organe de soupape (64) mobile par pivotement que dans une position de fermeture de l'organe de soupape (64), un appui d'étanchéité à plat de l'organe de soupape (64) au niveau de la tubulure de canal (11) est assuré.

4. Dispositif de soupape selon la revendication 2 ou 3, **caractérisé en ce que** la partie de liaison (9) présente une languette d'organe de soupape placée de manière dégagée par endroits, en particulier au moyen d'un évidement (63) en forme de U, au niveau de laquelle l'organe de soupape (64) disposé en face de la tubulure de canal est réalisé et qui est réalisée pour déplacer de manière relative et élastique l'organe de soupape (64) par rapport à la partie de liaison (9) lorsqu'elle repose sur la tubulure de canal (11).

5. Dispositif de soupape selon l'une quelconque des revendications précédentes, **caractérisé en ce que** la partie de liaison (9) est fixée au niveau du carter de soupape (4) avec au moins deux articulations de corps solide (17, 18) isolées l'une de l'autre de manière électrique, qui servent respectivement à alimenter de manière électrique le rotor.

6. Dispositif de soupape selon l'une quelconque des revendications précédentes, **caractérisé en ce que** le rotor (12) est réalisé en tant qu'ensemble de bobines électrique, qui comprend un corps de bobine (46) fixé au niveau de la partie de liaison et une spire de bobine (50) appliquée sur le corps de bobine (46), et que le stator (8) comprend un groupe magnétique avec au moins un aimant permanent (78) et au moins une pièce conductrice de flux (77, 79) pour réaliser un entraînement électrodynamique.

7. Dispositif de soupape selon la revendication 6, **caractérisé en ce que** le corps de bobine (46) comprend une section de douille (47) réalisée de préférence de manière cylindrique circulaire, en particulier métallique, servant à recevoir la spire de bobine (50) et une bague de montage (48) électriquement isolante jouxtant du côté d'une extrémité la section de douille (47), destinée à être fixée au niveau de la partie de liaison (9), dans lequel la bague de montage (48) présente respectivement des tiges de contact (58, 59) dépassant de préférence de manière tangentielle, reliées à des systèmes de soutirage de la spire de bobine (50), servant à établir un contact électrique avec la partie de liaison (9).

8. Dispositif de soupape selon la revendication 6 ou 7, **caractérisé en ce que** l'aimant permanent (78) est réalisé en tant qu'aimant annulaire avec un champ magnétique orienté axialement, et que la pièce conductrice de flux (77, 79) réalisée en particulier de manière symétrique en rotation est réalisée pour dévier le champ magnétique dans une direction radiale.

9. Dispositif de soupape selon la revendication 6, 7 ou 8, **caractérisé en ce que** le rotor (12) et le stator (8) réalisent une fente annulaire, dans laquelle un liquide d'amortissement, en particulier un ferrofluide, est introduit pour un amortissement du déplacement de soupape.

10. Dispositif de soupape selon l'une quelconque des revendications précédentes, **caractérisé en ce que** l'articulation de corps solide (17, 18) définit un axe de pivotement (20), et que la partie de liaison (9) s'étend de part et d'autre de l'axe de pivotement (20) et est pourvue, au niveau de zones d'extrémité opposées les unes aux autres, du rotor (12) et d'un contrepoids (19) de sorte qu'un centre de gravité de la partie de liaison (9) est disposé sur l'axe de pivotement (20).

11. Dispositif de soupape selon la revendication 10, **caractérisé en ce qu'**une distance depuis l'axe de pivotement (20) jusqu'à l'axe central (60) correspond au moins à une distance entre l'axe de pivotement (20) et la languette d'organe de soupape (64), de préférence est égale au moins à deux fois et au maximum à huit fois, en particulier à quatre fois, la distance entre l'axe de pivotement (20) et la languette d'organe de soupape (64).
